# EUROPÄISCHE PATENTSCHRIFT

(11) **EP 2 312 340 B1**
(45) Veröffentlichungstag und Bekanntmachung des Hinweises auf die Patenterteilung: **14.12.2011**
(21) Anmeldenummer: 09172533.3
(22) Anmeldetag: 08.10.2009
(51) Int. Cl.: G01V 8/10

(54) **Verfahren zum Betrieb eines optoelektronischen Sensors und optoelektronischer Sensor**
Method for operating an optoelectronic sensor and optoelectronic sensor
Procédé de fonctionnement d'un capteur optoélectronique et capteur optoélectronique

(43) Veröffentlichungstag der Anmeldung: 20.04.2011
(73) Patentinhaber: SICK AG, 79183 Waldkirch (DE)
(72) Erfinder: Wüstefeld, Martin, 79350 Sexau (DE); Henkel, Olaf, 79276 Reute (DE)
(74) Vertreter: Ludewigt, Christoph

(56) Entgegenhaltungen:
- EP-A1- 1 933 173
- EP-A1- 2 012 144
- DE-A1- 19 926 214
- DE-A1-102007 031 430
- DE-U1- 29 923 142

## Beschreibung

Die Erfindung betrifft ein Verfahren zum Betrieb eines optoelektronischen Sensors mit mindestens einer Sendeeinheit zum Aussenden von Lichtsignalen in einen Überwachungsbereich, mindestens einer Empfangseinheit zum Empfang der von der Sendeeinheit ausgesandten Lichtsignale und einer Steuer- und Auswerteelektronik zur Steuerung der Sende- und Empfangseinheit und zur Auswertung des von der Empfangseinheit empfangenen Lichtsignals und einen so ausgestalteten optoelektronischen Sensor.

Derartige optoelektronische Sensoren werden beispielsweise zur Zugangsüberwachung in Form von Lichtgittern eingesetzt. Anwendungen sind z.B. die Zugangssicherung von automatischen Fertigungsanlagen, die Absicherung von Einfahrtsöffnungen zu Fertigungszellen, die Absicherung von Abkantpressen und Palettieranlagen, die Transporttechnik, die Förder- und Lagertechnik, die Verpackungsindustrie, der Maschinenbau und die Automobilindustrie.

Falls ein nicht zugelassenes Objekt das Lichtgitter durchtritt, wird eine Sicherheitsfunktion ausgelöst, z.B. ein Alarm ausgelöst, eine gefährdende Produktionsmaschine abgeschaltet oder dergleichen.

Der Nachweis eines Gegenstandes im Lichtgitter beruht darauf, dass es zu einer Reduktion des Energieeintrages in eine gegebene Empfangseinheit kommt, weil der Gegenstand im Lichtstrahl die Empfangseinheit abschattet. Man führt daher eine Schaltschwelle für das Empfängersignal ein, bei deren Unterschreitung ein Schaltprozess ausgelöst wird, der anzeigt, dass ein Gegenstand in das Lichtgitter eingedrungen ist, was ggf. zum Auslösen einer Sicherheitsfunktion führt.

Naturgemäß muss in sicherheitsrelevanten Anwendungen vermieden werden, dass durch eine andere Lichtquelle ein zusätzlicher Energieeintrag in eine gegebene Empfangseinheit erfolgt, da dieser zusätzliche Energieeintrag dazu führen könnte, dass die Schaltschwelle nicht mehr unterschritten wird, obwohl sich eigentlich ein Objekt im Strahlengang befindet, das zum Auslösen der Sicherheitsfunktion führen müsste.

Daraus wird deutlich, dass zwischen dem Lichtstrahl, der von einer gegebenen Empfangseinheit zugeordneten Sendeeinheit ausgestrahlt und in die zugeordnete Empfangseinheit eingestrahlt wird und dem Lichtsignal, das in die betreffende Empfangseinheit eingestrahlt wird und den Lichtstrahl sowie weitere Beiträge, wie das Umgebungslicht oder auch die von benachbarten Sendeeinheiten abgestrahlten Lichtstrahlen umfasst, klar zu unterscheiden ist.

Aus diesem Grund werden üblicherweise die Sendeeinheiten optoelektronischer Sensorsysteme so konzipiert, dass sie die zur Sendeeinheit gehörende Lichtquelle optisch durch eine oder mehrere Linsen der Sendeeinheit so nachbearbeiten, dass der schließlich von der Sendeeinheit ausgesandte Lichtstrahl mit einem kleinen Öffnungswinkel, typischerweise zwischen 1 und 2°, oder sogar mit konstantem Radius ausgesendet wird. Da zugleich ein gewisser Öffnungswinkel oder Radius des ausgesandten Lichtstrahls notwendig ist, um eine effiziente Überwachung des Schutzraums zu gewährleisten, müssen diese Linsen abgesetzt, in einem gewissen Abstand von der Lichtquelle angeordnet sein. Dies bezeichnet man als "abgesetzte Optik".

In im Wesentlichen gleicher Weise werden bekannte Empfangseinheiten so aufgebaut, dass sie nur einen begrenzten Akzeptanzwinkel aufweisen.

Die EP 2 012 144 A1 offenbart ein Lichtgitter, wobei Sendeeinheiten und Empfängereinheiten zu Gruppen zusammengefasst werden und die Sendeeinheiten zur Abstrahlung von zueinander orthogonalen Pulsfolgen ausgelegt sind.

Die DE 10 2007 031 430 A1 offenbart ein Lichtgitter, bei dem bei nicht angesteuerten Sendeeinheiten für bereitgestellte Codes eine Korrelation zwischen einem in mindestens eine Empfangseinheit eingestrahlten Lichtsignal und dem jeweils ausgewählten Code berechnet und gespeichert wird und anschließend der Code mit einem kleinsten berechneten Korrelationswert verwendet wird, um die Sendeeinheiten anzusteuern.

Die DE 199 26 214 A1 offenbart ein Verfahren zur Unterdrückung von Störsignalen in Optosensoren, wobei von einer Sendeeinheit Chirps-Folgen von Lichtpulsen emittiert werden, eine Autokorrelation zwischen den gesendeten Signalen und den empfangenen Signalen gebildet wird und die Autokorrelationsfunktion mit einem Schwellwert verglichen wird und auf ein im Strahlengang angeordnetes Hindernis dann geschlossen wird, wenn der Wert der Autokorrelationsfunktion den Schwellwert nicht überschreitet.

Die DE 1 933 173 A1 offenbart ein Lichtgitter, bei dem in einer Auswerteeinheit ein Empfangsmuster mit einem, einem Sendemuster entsprechenden Referenzmuster korreliert wird und daraus eine Phasenverschiebung berechnet wird.

Es ist zur Reduktion des negativen Effektes des Eintrags von Umgebungslicht auf die Funktion eines Lichtgitters z.B. aus der DE 199 26 214 A1, bekannt, die Sendeeinheiten einen "Code" in Form einer hochkorrelierten Folge von Lichtpulsen als Lichtstrahl senden zu lassen und die Korrelation der von den Sendeeinheiten gesendeten und in die Empfangseinheiten eingestrahlten Lichtsignale zur Feststellung, ob sich ein Gegenstand im Lichtgitter befindet, heranzuziehen. Die Korrelation zwischen Lichtsignalen, die auf Umgebungslicht beruhen, und der gesendeten Folge von Lichtpulsen wird in der Regel gering sein. Als Konsequenz kann ein in ein Empfängerelement eingestrahltes Signal, das zwar die Schaltschwelle nicht unterschreitet, dessen Korrelation mit dem gesendeten Signal aber einen kleinen Wert ergibt, als durch Umgebungslicht hervorgerufen identifiziert werden und so verhindert werden, dass trotz einer Verletzung des Überwachungsraumes die Sicherheitsfunktion passiv bleibt.

Nachteilig bei den aus dem Stand der Technik bekannten Systemen ist, dass die derart aufgebauten optoelektronischen Sensoren aufwendig zu justieren sind, da Sende- und Empfangseinheit relativ zueinander so ausgerichtet werden müssen, dass zumindest ein Teil des von einer Sendeeinheit ausgesandten Lichtstrahls in den Akzeptanzwinkel der zugeordneten Empfangseinheit fällt. Darüber hinaus ist das Vorsehen einer abgesetzten Optik wegen der Materialkosten für die Linsen teuer. Weiter gesteigert wird die Kostenbelastung dadurch, dass wegen notwendiger hoher Präzision der räumlichen Anordnung der abgesetzten Optik die Fertigung der Sendeeinheiten hochpräzise durchgeführt werden muss.

Aufgabe der Erfindung ist daher, ein Verfahren zum Betrieb eines optoelektronischen Sensors und einen optoelektronischen Sensor zu schaffen, das/der kostengünstiger ist und die Anforderungen an die Justage des optoelektronischen Sensors reduziert.

Diese Aufgabe wird gelöst durch ein Verfahren zum Betrieb eines optoelektronischen Sensors mit den Merkmalen des Patentanspruchs 1 und einen optoelektronischen Sensor mit den Merkmalen des Patentanspruchs 4.

Vorteilhafte Ausführungen und Weiterbildungen der Erfindung sind in den jeweils rückbezogenen Unteransprüchen angegeben.

Der Erfindung liegt die Erkenntnis zugrunde, dass durch einen mindestens einmal, z.B. bei der Initialisierung des Lichtgitters, durchgeführten Verfahrensschritt, während dessen eine Anpassung der Sendeleistung der Sendeeinheit und/oder einer empfangsseitigen Bewertungsschwelle vorgenommen wird, die sicherstellt, dass die Codierung des durch die Sendeeinheit ausgesendeten Lichtsignals maximale Wirksamkeit entfaltet, das bisherige Erfordernis, mit einem kleinen Öffnungswinkel von 1 bis 2° oder parallel von der Sendeeinheit ausgesandten Lichtstrahlen zu arbeiten, ohne Einbuße von Sicherheit entfallen kann.

Das erfindungsgemäße Verfahren zum Betrieb eines optoelektronischen Sensors mit mindestens einer Empfangseinheit, mindestens einer der Empfangseinheit zugeordneten Sendeeinheit und einer Steuer- und Auswerteelektronik umfasst wenigstens die folgenden Schritte: Zunächst wird eine Sendeleistung der mindestens einen Sendeeinheit und/oder einer empfangsseitigen Bewertungsschwelle angepasst. Dabei ist das Kriterium für die Anpassung, dass die Empfangseinheit gerade unterhalb der Sättigung arbeitet. Wenn dies der Fall ist, ist das Zeitverhalten der Empfangseinheit optimal, so dass der Nachweis von Pulssequenzen besonders gut funktioniert.

Ferner wird ein Code durch die mindestens eine Sendeeinheit ausgesendet. Der Code gibt eine korrelierte Folge von Lichtpulsen an, die die mindestens eine Sendeeinheit als Lichtstrahl abgibt, wenn sie von der Steuer- und Auswerteelektronik angesteuert wird. Dabei gibt die Sendeeinheit Lichtpulse mit einem Öffnungswinkel von mindestens 10°, vorzugsweise 20° ab, was beispielsweise durch Verwendung einer LED ohne abgesetzte Optik möglich ist.

Ferner muss ein von der mindestens einen Empfangseinheit empfangenes Signal zur Feststellung einer etwaigen Abschattung des von der mindestens einen Sendeeinheit abgegebenen Lichtstrahls ausgewertet werden. Dies geschieht unter Berücksichtigung der Folge von Lichtpulsen; nur solche Lichteinträge, die dem Code der der Empfangseinheit zugeordneten Sendeeinheit entsprechende Pulssequenz aufweisen, werden bei der Analyse, ob eine Abschattung bzw. ein nicht zugelassener Eingriff ins Schutzfeld erfolgt ist, berücksichtigt.

Diese Vorgehensweise bringt signifikante Vorteile mit sich. Durch die Verwendung von Lichtstrahlen mit einem im Vergleich zu den üblichen Öffnungswinkeln großen Öffnungswinkel von über 10° wird die Justage des optoelektronischen Sensors weitgehend entschärft, da auch dann, wenn eine Fehljustage von einigen Grad vorliegt, noch der gesamte Akzeptanzwinkel der Empfangseinheit ausgeleuchtet wird. Gleichzeitig kann bei Einsatz des erfindungsgemäßen Verfahrens auf eine abgesetzte Optik der Sendeeinheit verzichtet werden, was die Kosten für diese Optik einspart und die Präzisionserfordernisse bei der Herstellung der Sendeeinheit senkt, was weitere Kostenvorteile mit sich bringt.

Eine besonders vorteilhafte Ausgestaltung des Verfahrens sieht vor, dass beim Schritt des Anpassens der Sendeleistung der mindestens einen Sendeeinheit und/oder der empfangsseitigen Bewertungsschwelle die Sendeleistung der mindestens einen Sendeeinheit so lange geändert wird, bis die Empfangseinheit in ihren Arbeitsbereich gekommen ist.

Man geht also von einem zu starken Lichtsignal, das die Empfangseinheit sättigt, aus und senkt die Signalintensität ab, bis keine Sättigung mehr vorliegt oder man steigert die Signalintensität schrittweise bis erstmals eine Sättigung der Empfangseinheit vorliegt und reduziert dann die Signalintensität wieder um einen Schritt. Wenn mit stark variierenden Umgebungslichteinträgen zu rechnen ist, kann es auch vorteilhaft sein, eine derartige Anpassung wiederholt vorzunehmen, beispielsweise während ein anderes Paar von Empfangseinheit und der Empfangseinheit zugeordneter Sendeeinheit gerade aktiv sind, sofern dieser Betrieb nicht das Ergebnis der Anpassung verfälscht.

Der erfindungsgemäße optoelektronische Sensor umfasst mindestens eine ortsauflösende Empfangseinheit, mindestens eine der Empfangseinheit zugeordnete Sendeeinheit zum Aussenden von Lichtstrahlen mit einem Öffnungswinkel von mindestens 10°, und eine Steuer- und Auswerteelektronik, die zumindest Sendeeinheitenansteuerungsmittel zur Ansteuerung der Sendeeinheiten, Empfangseinheitenansteuerungsmittel zur Ansteuerung der Empfangseinheiten, Auswertemittel zur Auswertung des in die Empfangseinheiten eingestrahlten Signals und zur Prüfung, ob die in eine Empfangseinheit eingestrahlte Lichtenergie eine Schaltschwelle überschreitet, Codesteuermittel zur Ansteuerung der Sendeeinheiten mit einem ausgewählten Code, wobei der Code eine korrelierte Folge von Lichtpulsen angibt, die die mindestens eine Sendeeinheit als Lichtstrahl abgibt, wenn sie angesteuert wird und Korrelationsberechnungsmittel zur Berechnung der Korrelationsfunktion zwischen einem ausgewählten gespeicherten Code und dem in eine oder mehrere angesteuerte Empfangseinheiten eingestrahlten Licht und zur Prüfung, ob die Korrelationsfunktion eine Korrelationsschwelle überschreitet, aufweist, wobei die Sendeeinheitenansteuerungsmittel zur Ansteuerung der Sendeeinheiten und/oder die Empfangseinheitenansteuerungsmittel zur Ansteuerung der Empfangseinheiten zur Anpassung einer Sendeleistung der Sendeeinheiten und/oder zur Festlegung von Empfangsbewertungsschwellen geeignet sind. Der Sensor ist aus den bereits oben bei der Vorstellung des erfindungsgemäßen Verfahrens diskutierten Gründen sehr einfach zu justieren und kostengünstig herzustellen.

Eine besonders preiswerte Variante des optoelektronischen Sensor liegt vor, wenn die mindestens eine Sendeeinheit eine LED ohne abgesetzte Optik ist.

Weiter ist es vorgesehen, den Akzeptanzwinkel der Empfangseinheit für den laufenden Betrieb des optoelektronischen Sensors anzupassen bzw. einzustellen, insbesondere zu verringern, um Anforderungen der Normen, insbesondere der IEC 61496-2 bezüglich der Abstände zu spiegelnden Flächen zu erfüllen. Hierzu weist die Empfangseinheit entsprechende Mittel zur Anpassung des empfangsseitigen Akzeptanzwinkels auf.

Zunächst steht durch die Nutzung der gesamten photoempfindlichen Fläche der ortsauflösenden Empfangseinheit ein großer Akzeptanzwinkel zur Verfügung, so dass die Sendeeinheit und Empfangseinheit gut zueinander justiert werden können.

Nach der Justage, für den regulären Betrieb des optoelektronischen Sensors, wird dann der Akzeptanzwinkel soweit reduziert, dass die Anforderungen an die Abstände zu spiegelnden Flächen erfüllt werden. Dies geschieht beispielsweise durch eine elektronische Ausblendung einzelnder Pixel der ortsauflösenden Empfangseinheit, beispielsweise eines CCD- oder CMOS-Bildaufnehmers.

Im Folgenden wird die Erfindung anhand der beigefügten Figur näher erläutert.

Es zeigt
- Fig. 1: ein Lichtgitter gemäß einer Ausführungsform der Erfindung;
- Fig. 2:: ein Lichtgitter gemäß dem Stand der Technik;
- Fig. 3: ein Lichtgitter gemäß Figur 1 mit Einstellung eines Aktzeptanzwinkels bei der Empfangseinheit.

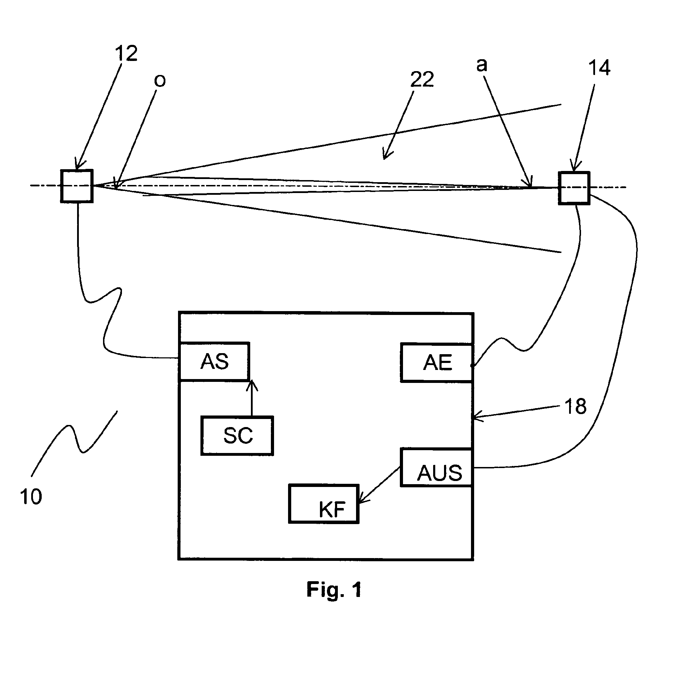

Figur 1 zeigt einen optoelektronischen Sensor 10, umfassend eine Empfangseinheit 14 und eine in einem Abstand gegenüber der Empfangseinheit 14 angeordnete Sendeeinheit 12, eine Steuer- und Auswerteelektronik 18 sowie einen Lichtstrahl 22, der von der Sendeeinheit 12 ausgestrahlt und in die Empfangseinheit 14, die der Sendeeinheit 12 gegenüberliegt und der diese zugeordnet ist, eingestrahlt wird. Das Lichtsignal, das in die Empfangseinheit eingestrahlt und von dieser nachgewiesen wird, umfasst einen Beitrag des Lichtstrahles 22, aber auch weitere Beiträge, beispielsweise des Umgebungslichts.

Die Empfangseinheit 14 weist jeweils einen eigentlichen Lichtempfänger oder Empfangschip und eine zugeordnete Empfangsoptik auf. Der Empfangschip ist ortsauflösend, beispielsweise eine PSD (Position sensing diode) oder ein Chip mit einzelnen Empfangspixeln wie ein CCD- oder CMOS Chip. Dabei können die Empfangspixel insbesondere zeilen- oder matrixförmig angeordnet sein.

Die Steuer- und Auswerteelektronik 18 weist als Bestandteile insbesondere Sendeeinheitenansteuerungsmittel AS zur Ansteuerung der Sendeeinheiten 12 und Empfangseinheitenansteuerungsmittel AE zur Ansteuerung der Empfangseinheiten 14, Auswertemittel AUS zur Auswertung des in die Empfangseinheiten 14 eingestrahlten Lichtsignals und zur Prüfung, ob die in eine Empfangseinheit 14 eingestrahlte Lichtenergie eine Schaltschwelle überschreitet sowie zum Auslösen einer Sicherheitsfunktion, Codesteuermittel SC zur Ansteuerung der Sendeeinheit 12 mit einem Code, der aus einer Sequenz von Lichtpulsen besteht und Korrelationsberechnungsmittel KF zur Berechnung der Korrelationsfunktion zwischen dem Code und dem in die angesteuerte Empfangseinheit 14 eingestrahlten Licht auf.

Bei allen vorstehend aufgezählten Mitteln wird es sich in der Regel um Funktionsblöcke einer Schaltung oder Kombinationen von Funktionsblöcken einer Schaltung handeln, sie können aber auch separat oder in Gruppen zusammengefasst ausgeführt sein.

Ferner zeigt die Figur den Öffnungswinkel o des durch die Sendeeinheit 12 ausgesandten Lichtstrahls, der mindestens 10° betragen muss und in der in der Figur dargestellten Ausführungsform 20° beträgt. Ebenfalls eingezeichnet ist der Akzeptanzwinkel a der Empfangseinheit, der nur wenige Grad beträgt. In dieser Darstellung wird besonders deutlich, dass der erfindungsgemäß ausgestaltete optoelektronische Sensor 10 leicht zu justieren ist, denn solange sich der Akzeptanzwinkel a vollständig im durch den Öffnungswinkel o definierten Kegel befindet, ist die zuverlässige Funktion des optoelektronischen Sensors gewährleistet.

Zum Betrieb des optoelektronischen Sensors 10 wird in der Regel zunächst eine Synchronisation der Sendeeinheiten 12 und Empfangseinheiten 14 durchgeführt. Dies geschieht mit Hilfe einer bestimmten, nur für die Synchronisation reservierten Pulsfolge.

Ferner erfolgt die Anpassung der Sendeleistung der Sendeeinheit 12 und/oder der Empfangsschwellen der Empfangseinheit 14. Wesentliches Kriterium ist dabei, die Empfangseinheit 14, genauer gesagt den zu ihr gehörenden Lichtdetektor, in seinem Arbeitsbereich, vorzugsweise knapp unterhalb der Sättigung zu betreiben, um ein besonders gutes Zeitverhalten, das für den Betrieb mit Codes notwendig ist, zu erreichen.

Anschließend erfolgt die automatisierte Auswahl oder der Abruf eines vorgegebenen Codes, mit dem der optoelektronische Sensor 10 betrieben wird. Bei den Codes handelt es sich um Informationen, die mit Hilfe der Codesteuermittel SC und der Sendeeinheitenansteuerungsmittel AS in eine Folge von Lichtpulsen, die von den angesteuerten Sendeeinheiten 12 als Lichtstrahl 22 abgegeben werden, umgesetzt werden können. Ein gegebener Code entspricht also einer Folge von Lichtpulsen, insbesondere einer Folge von orthogonalen oder näherungsweise orthogonalen Lichtpulsen.

Dieser Code wird dann an das Codesteuermittel SC übergeben und von diesem dazu verwendet, mit Hilfe der Sendeeinheitenansteuerungsmittel AS die Sendeeinheit zu veranlassen, wenn sie angesteuert werden, eine dem Code entsprechende Folge korrelierter Lichtpulse als Lichtstrahl 22 auszusenden.

Mit diesem automatisch bestimmten Code erfolgt dann der übliche Betrieb eines optoelektronischen Sensors. Da bei diesem meist eine Vielzahl von paarweise einander zugeordneten Sendeeinheiten 12 und Empfangseinheiten 14 vorhanden sind, von denen im Betrieb meist zu einem gegebenen Zeitpunkt nur einzelne Paare von einander zugeordneten Sendeeinheiten 12 und Empfangseinheiten 14 verwendet werden, ist es auch denkbar, während des laufenden Betriebes mit Hilfe von gerade nicht paarweise mit einer Sendeeinheit 12 angesteuerten Empfangseinheiten 14, für die insbesondere ein signifikanter Beitrag des Lichtstrahles 22 der gerade angesteuerten Sendeeinheit 12 zum Lichtsignal ausgeschlossen ist, die Anpassung der Sendeleistung und/oder der Empfangsschwellen periodisch oder kontinuierlich aufzufrischen.

Die Sendeeinheit 12 strahlt ihr Licht in einen großen Winkelbereich, der ohne besondere Bündelungsmaßnahmen nur grob in Richtung der Empfangseinheit 14 liegt. Deshalb benötigen die Sendeeinheit 12 auch keine Blenden oder Sendeoptik. Es kann eine Sendeoptik zu dem Zweck vorhanden sein, das Licht zur Erreichung einer größeren Reichweite zu bündeln. Diese Sendeoptik ist aber nicht dafür ausgebildet, eine Umspiegelungssicherheit zu erreichen und soll nicht zu genau fokussieren, so dass die Sendeeinheit 12 stets wegen ihres großen Sendeöffnungswinkels sehr einfach ausgerichtet werden können. Der Winkelbereich ist in der Realität durch einen Raumwinkel festgelegt, und der von der Sendeeinheit 12 lichterfüllte Bereich bildet einen Sendelichtkegel. Da dieser Sendelichtkegel einen so großen Öffnungswinkel hat, ist von vorneherein oder nach allenfalls sehr grober und einfacher Ausrichtung sichergestellt, dass die zugehörige Empfangseinheit 14 innerhalb des Sendelichtkegels liegt.

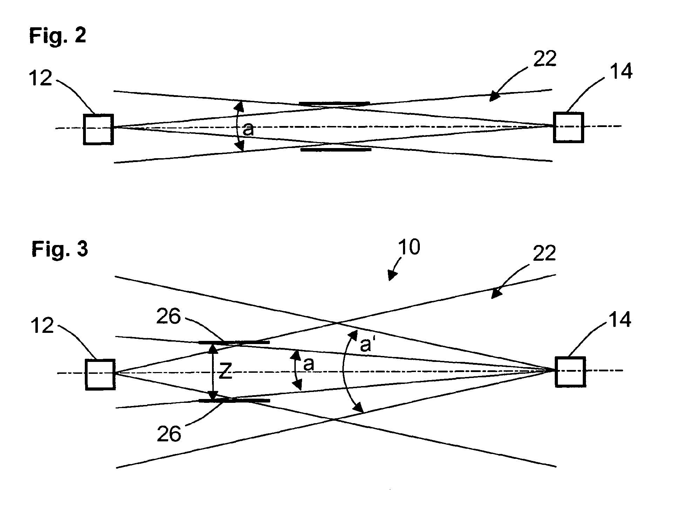

Auf die Empfangseinheit 14 umgekehrt trifft nur solches Licht, das innerhalb eines Empfangslichtkegels des Akzeptanzwinkels a liegt. Damit die zugehörige Sendeeinheit 14 innerhalb des Akzeptanzwinkels a liegt, muss die Empfangseinheit 14 genau gegenüber der zugehörigen Sendeeinheit 12 ausgerichtet sein. Der Aktzeptanzwinkel a kann durch Blenden und/oder die Empfangsoptik 26 eingestellt werden. Die Ortsauflösung des Empfangschips 24 ermöglicht aber sowohl eine einfache Einstellung des Akzeptanzwinkels a als auch eine erheblich erleichterte Ausrichtung, wie weiter unten noch im Zusammenhang mit den Figuren 2 und 3 erläutert wird.

Um die Bedingung an den Akzeptanzwinkels a des Empfangslichtkegels besser zu verstehen, sind in Figur 2 Sendelichtkegel und Empfangslichtkegel gemäß dem Stand der Technik eingezeichnet. Beide Kegel erfüllen die Normbedingung, dass ihr Öffnungswinkel höchstens gleich einem Normöffnungswinkel ist. Die Ausrichtbedingung ist hier eine zweistufige: Wie auch erfindungsgemäß muss die Sendeeinheit 12 im Stand der Technik im Empfangslichtkegel der Empfangseinheit 14 liegen. Zusätzlich muss aber auch die Empfangseinheit 14 im Sendelichtkegel liegen. Diese letztgenannte Bedingung ist erfindungsgemäß von vorneherein wegen der Größe des Sendelichtkegels erfüllt.

Im Stand der Technik sorgt die doppelte Bedingung durch den schmalen Sende- und Empfangslichtkegel für ausreichende Umspiegelungssicherheit.

Figur 3 zeigt eine Draufsicht auf einen optoelektronischen Sensor 10 aus einer Sendeeinheit 12 und einer Empfangseinheit 14 gemäß der Erfindung.

Sicherheitsnormen, insbesondere die IEC 61496-2, schreiben eine Umspiegelungssicherheit des Sensors 10 gegenüber reflektierenden Flächen vor, die einen vorgeschriebenen Mindestabstand zu dem Sensor 10 haben. Umspiegelung bedeutet, dass Licht der Sendeeinheit 12 nicht auf dem direkten Weg, sondern nach Reflexion an einer oder mehreren reflektierenden Flächen zu der zugehörigen Empfangseinheit 14 gelangt. Dabei könnte der direkte Weg von der Sendeeinheit 12 zu der Empfangseinheit 14 durch ein Objekt in dem Überwachungsbereich blockiert sein, was aber dem Auswertemittel entgeht, weil das Licht auf dem indirekten Weg nach Umspiegelungen der Empfangseinheit 14 dennoch trifft. Diese Fehlfunktion darf nicht auftreten, da die Gesundheit des Bedienpersonals davon abhängen kann.

Die Sicherheitsnorm ist daher nur erfüllt, wenn keine Position und Orientierung einer oder mehrerer reflektierender Flächen denkbar ist, die einen Mindestabstand zu dem Sensor 10 einhalten und dennoch zu einer Umspiegelung führen. Dieser Mindestabstand definiert also einen Normbereich als "Tunnel" oder Zylinder um die Verbindungsachse zwischen Sendeeinheit 12 und Empfangseinheit 14. Innerhalb dieses Normbereichs darf auch eine Umspiegelung stattfinden. Der von der Norm festgelegte Mindestabstand Z ist nicht konstant, sondern abhängig von dem Abstand zwischen Sendeeinheit 12 und Empfangseinheit 14.

Der Mindestabstand Z desjenigen Bereichs, außerhalb dessen keine Umspiegelung mehr möglich ist, kann durch eine spiegelnde Fläche 26 an der denkbar ungünstigsten Position bestimmt werden. Wie in Figur 3 leicht erkennbar, könnte eine Fläche 26 in größerem Abstand Z als die dargestellte Fläche 26 kein Licht mehr in den Akzeptanzwinkel a reflektieren, im Unterschied zu einem vergrößerten Akzeptanzwinkel a'.

Anhand der Figur 3 wird nunmehr erläutert, wie die Ausrichtung der Empfangseinheit 14 durch eine ortsauflösende Empfangseinheit erheblich vereinfacht werden kann.

Bei der Ausrichtung des Sensors 10 in einer Einlernphase wird nun die Sendeeinheit 12 eingeschaltet und ermittelt, wo ihr Licht auf einem Empfangschip auftrifft, das heißt welche Lichtempfangselemente von einem Lichtfleck überdeckt sind. Das Auswertemittel speichert die Position beziehungsweise Identität dieser Lichtempfangselemente als eine Sollposition. Somit genügt es, wenn der Bediener den Sensor 10 genau genug ausrichtet, dass der Lichtfleck überhaupt irgendwo den Empfangschip trifft. Die Größe des Empfangschips 24 ist dabei in erster Linie durch Herstellungskosten begrenzt, wobei eine größere und feiner aufgelöste Matrix zwar teurer ist, aber eine einfachere und genauere Ausrichtung ermöglicht. Hier ist unter Kostengesichtspunkten zu wählen, ob eine Matrix von 16x16, 128x128 oder noch mehr Pixeln eingesetzt wird.

Im Betrieb wird dann eine direkte Lichtverbindung zwischen Sendeeinheit 12 und Empfangseinheit 14 von dem Auswertemittel nur dann angenommen, wenn genau diejenigen Pixel von Sendelicht getroffen sind, die in der Sollposition eingelernt worden sind. Die übrigen Pixel sind bei dieser Auswertung quasi stumm geschaltet. Das dort eintreffende Licht kann aber dennoch ausgewertet werden, beispielsweise um Informationen über störendes Umgebungslicht zu gewinnen. Trifft das Sendelicht aus einer anderen Richtung ein, so fällt es nicht mehr auf die Sollposition unterhalb des eingelernten Lichtflecks, sondern auf andere Lichtempfangselemente an einer anderen Position. Das Auswertemittel empfängt also zwar Licht der Sendeeinheit 12, aber nicht an der eingelernten und erwarteten Sollposition. Dies wird in dem Auswertemittel so behandelt wie ein unterbrochener Lichtstrahl. Es gibt nämlich für ein Wandern der Empfangsposition auf dem Empfangschip nur zwei Gründe, die beide zu einem Ansprechen des Sensors 10 führen müssen. Entweder ist der Sensor 10 dejustiert oder das Sendelicht ist nicht auf einem direkten, sondern nach Umspiegelung auf einem indirekten Weg zur Empfangseinheit 14 gelangt.

Durch die ortsauflösende Empfangseinheit 14 wird damit die Ausrichtung erheblich erleichtert. Die Sollposition, deren Größe und Lagegenauigkeit von der Auflösungsfähigkeit der Matrix der Empfangseinheit und der Güte der Empfangsoptik abhängt, legt somit letztlich den Akzeptanzwinkel fest. Deshalb lässt sich auch der geforderte Normöffnungswinkel mit einem einfachen Ausrichtverfahren einstellen. Das Einlernen der Sollposition ermöglicht wahlweise, auch empfangsseitig auf eine mechanische Blende zu verzichten.

### Bezugszeichenliste

- 10: Optoelektronischer Sensor
- 12: Sendeeinheit
- 14: Empfangseinheit
- 18: Steuer- und Auswerteelektronik
- 22: Lichtstrahl
- 24: Akzeptanzbereich
- 26: spiegelnde Fläche

- AS: Sendeeinheitenansteuerungsmittel
- AE: Empfangseinheitenansteuerungsmittel
- AUS: Auswertemittel
- SC: Codesteuermittel
- KF: Korrelationsberechnungsmittel

- o: Öffnungswinkel
- a: Akzeptanzwinkel

## Patentansprüche

1. Verfahren zum Betrieb eines optoelektronischen Sensors (10) mit mindestens einer Empfangseinheit (14) und mindestens einer der Empfangseinheit (14) zugeordneten Sendeeinheit (12) und einer Steuer- und Auswerteelektronik (18), umfassend die Schritte
- Anpassen einer Sendeleistung der mindestens einen Sendeeinheit (12) und/oder einer empfangsseitigen Bewertungsschwelle
- Aussenden eines Codes durch die mindestens eine Sendeeinheit (12), wobei der Code eine korrelierte Folge von Lichtpulsen angibt, die die mindestens eine Sendeeinheit (12) als Lichtstrahl (22) abgibt, wenn sie von einer Steuer- und Auswerteelektronik (18) angesteuert wird, und
- Auswerten eines von der mindestens einen Empfangseinheit (14) empfangenen Signals zur Feststellung einer Abschattung des von der mindestens einen Sendeeinheit (12) abgegebenen Lichtstrahls (22)
**dadurch gekennzeichnet, dass**
die mindesten eine Empfangseinheit (14) ortsauflösend ist mit jeweils einer photoemfindlichen Fläche und jeweils einer zugeordneten Empfangsoptik und die mindesten eine sendeeinheit Lichtpulse mit einem Öffnungswinkel (o) von mindestens 10° abgibt und ein empfangsseitiger Akzeptanzwinkel (a) für den regulären Betrieb nach einer Justage reduziert wird.

2. Verfahren nach Anspruch 1,
**dadurch gekennzeichnet, dass** im Schritt des Anpassens der Sendeleistung der mindestens einen Sendeeinheit (12) und/oder der empfangsseitigen Bewertungsschwelle die Sendeleistung der mindestens einen Sendeeinheit so lange geändert wird, bis der Empfänger in seinen Arbeitsbereich gekommen ist.

3. Optoelektronischer Sensor (10), umfassend
mindestens eine Empfangseinheit (14),
mindestens eine der Empfangseinheit (14) zugeordnete Sendeeinheit (12), eine Steuer- und Auswerteelektronik (18), die zumindest Sendeeinheitenansteuerungsmittel (AS) zur Ansteuerung der Sendeeinheiten (12) aufweist, Empfangseinheitenansteuerungsmittel (AE) zur Ansteuerung der Empfangseinheiten (14), Auswertemittel (AUS) zur Auswertung des in die Empfangseinheiten (14) eingestrahlten Signals und zur Prüfung, ob die in eine Empfangseinheit (14) eingestrahlte Lichtenergie eine Schaltschwelle überschreitet, Codesteuermittel (SC) zur Ansteuerung der Sendeeinheiten mit einem ausgewählten Code, wobei der Code eine korrelierte Folge von Lichtpulsen angibt, die die mindestens eine Sendeeinheit (12) als Lichtstrahl (22) abgibt, wenn sie angesteuert wird, Korrelationsberechnungsmittel (KF) zur Berechnung der Korrelationsfunktion zwischen einem ausgewählten Code und dem in eine oder mehrere angesteuerte Empfangseinheiten (14) eingestrahlten Licht und zur Prüfung, ob die Korrelationsfunktion eine Korrelationsschwelle überschreitet,
wobei die Sendeeinheitenansteuerungsmittel (AS) zur Ansteuerung der Sendeeinheiten (12) und/oder die Empfangseinheitenansteuerungsmittel (AE) zur Ansteuerung der Empfangseinheiten (14) zur Anpassung einer Sendeleistung der Sendeeinheiten (12) und/oder zur Festlegung von Empfangsbewertungsschwellen geeignet sind
**dadurch gekennzeichnet, dass**
die mindestens eine Empfangseinheit (14) ortsauflösend ausgebildet ist mit jeweils einer photoempfindlichen Fläche und jeweils einer zugeordneten Empfangsoptik und die mindestens eine Sendeeinheit zum Aussenden von Lichtstrahlen mit einem Öffnungswinkel von mindestens 10° ausgebildet ist und die mindestens eine ortsauflösende Empfangseinheit Mittel aufweist zur Reduzierung eines empfangsseitigen Akzeptanzwinkels (a) für den regulären Betrieb nach einer Justage.

4. Optoelektronischer Sensor (10) nach Anspruch 3,
**dadurch gekennzeichnet, dass** die mindestens eine Sendeeinheit eine LED ohne abgesetzte Optik ist.

## Claims

1. A method of operating an optoelectronic sensor (10) having at least one receiver unit (14) and at least one transmitter unit (12) associated with the receiver unit (14) and having control and evaluation electronics (18), comprising the steps:
- adapting a transmission power of the at least one transmitter unit (12) and/or an evaluation threshold at the reception side;
- transmitting a code by the at least one transmitter unit (12), wherein the code sets a correlated sequence of light pulses which the at least one transmitter unit (12) outputs as a light beam (22) when it is controlled by control and evaluation electronics (18); and
- evaluating a signal received by the at least one receiver unit (14) for determining a shadowing of the light beam (22) output by the at least one transmitter unit (12),
**characterised in that**
the at least one receiver unit (14) is spatially resolving with a respective photosensitive surface and a respective associated receiver optics; and **in that** the at least one transmitter unit outputs light pulses with an opening angle (o) of at least 10° and an acceptance angle (a) at the reception side for the regular operation is reduced after an adjustment.

2. A method in accordance with claim 1,
**characterised in that**, in the step of adapting the transmission power of the at least one transmitter unit (12) and/or the evaluation threshold at the reception side, the transmission power of the at least one transmitter unit is changed for so long until the receiver has reached its working range.

3. An optoelectronic sensor (10), comprising
at least one receiver unit (14),
at least one transmitter unit (12) associated with the receiver unit (14), control and evaluation electronics (18) which have at least transmitter unit control means (AS) for controlling the transmitter units (12), receiver unit control means (AE) for controlling the receiver units (14), evaluation means (AUS) for evaluating the signal radiated into the receiver units (14) and for checking whether the light energy radiated into a receiver unit (14) exceeds a switching threshold, code control means (SC) for controlling the transmitter units by a selected code, with the code setting a correlated sequence of light pulses which the at least one transmitter unit (12) outputs as a light beam (22) when it is controlled, correlation calculation means (KF) for calculating the correlation function between a selected code and the light radiated into one or more controlled receiver units (14) and for checking whether the correlation function exceeds a correlation threshold,
wherein the transmitter unit control means (AS) are suitable for controlling the transmitter units (12) and/or the receiver unit control means (AE) are suitable for controlling the receiver units (14) for adapting a transmission power of the transmitter units (12) and/or for fixing reception evaluation thresholds, **characterised in that**
the at least one receiver unit (14) is spatially resolving with a respective photosensitive surface and a respective associated receiver optics and the at least one transmitter unit is designed for transmitting light beams with an opening angle of at least 10° and the at least one spatially resolving receiver unit has means for reducing an acceptance angle (a) at the reception side for the regular operation after an adjustment.

4. An optoelectronic sensor (10) in accordance with claim 3, **characterised in that** the at least one transmitter unit is an LED without an offset optics.

## Revendications

1. Procédé pour le fonctionnement d'un capteur optoélectronique (10) comprenant au moins une unité réceptrice (14) et au moins une unité émettrice (12) associée à l'unité réceptrice (14), et une unité électronique de commande et d'évaluation (18), comprenant les étapes consistant à :
- adapter une puissance émise par ladite au moins une unité émettrice (12) et/ou un seuil d'évaluation côté réception,
- émettre un code par ladite au moins une unité émettrice (12), ledit code indiquant une succession d'impulsions lumineuses avec corrélation, succession qui est émise par ladite au moins une unité émettrice (12) sous forme de rayonnement lumineux (22) quand elle est pilotée par une unité électronique de commande et d'évaluation (18), et
- évaluation d'un signal reçu par ladite au moins une unité réceptrice (14) pour constater une occultation du rayon lumineux (22) émis par ladite au moins une unité émettrice (12),
**caractérisé en ce que**
ladite au moins une unité réceptrice (14) est à résolution locale avec respectivement une surface photosensible et respectivement une optique de réception associée, et ladite au moins une unité émettrice émet des impulsions de lumière avec un angle d'ouverture (o) d'au moins 10°, et un angle d'acceptance côté réception (a) pour le fonctionnement régulier est réduit après un ajustement.

2. Procédé selon la revendication 1,
**caractérisé en ce que** dans l'étape d'adaptation de la puissance émise par ladite au moins une unité émettrice (12) et/ou du seuil d'évaluation côté réception, on modifie la puissance émise par ladite au moins une unité émettrice aussi longtemps que le récepteur soit parvenu dans sa plage de travail.

3. Capteur optoélectronique (10), comprenant
au moins une unité réceptrice (14),
au moins une unité émettrice (12) associée à l'unité réceptrice (14),
une unité électronique de commande et d'évaluation (18) qui comprend au moins des moyens de pilotage d'unité émettrice (AS) pour piloter les unités émettrices (12), des moyens de pilotage d'unité réceptrice (AE) pour piloter les unités réceptrices (14), des moyens d'évaluation (AUS) pour évaluer le signal pénétrant dans les unités réceptrices (14) et pour vérifier si l'énergie lumineuse pénétrant dans une unité réceptrice (14) dépasse un seuil de commutation, des moyens de commande à code (SC) pour piloter les unités émettrices avec un code choisi, ledit code indiquant une succession d'impulsions de lumière avec corrélation, impulsions qui sont délivrées par ladite au moins une unité émettrice (12) sous forme de rayon lumineux (22) lorsque celle-ci est pilotée, des moyens de calcul de corrélation (KF) pour calculer la fonction de corrélation entre un code choisi et la lumière pénétrant dans une ou plusieurs unités réceptrices (14) pilotées et pour vérifier si la fonction de corrélation dépasse un seuil de corrélation,
dans lequel les moyens de pilotage d'unité émettrice (AS) conviennent pour piloter les unités émettrices (18) et/ou les moyens de pilotage d'unité réceptrice (AL) pour piloter les unités réceptrices (14) afin de d'ajuster une puissance émise par les unités émettrices (12) et/ou pour constater des seuils d'évaluation de réception,
**caractérisé en ce que**
ladite au moins une unité réceptrice (14) est réalisée avec résolution locale et avec respectivement une surface photosensible et respectivement une optique réceptrice associée, et ladite au moins une unité émettrice est réalisée pour émettre des rayons de lumière dans un angle d'ouverture d'au moins 10°, et ladite au moins une unité réceptrice à résolution locale comprend des moyens pour réduire un angle d'acceptance côté réception (a) pour le fonctionnement régulier après un ajustement.

4. Capteur optoélectronique (10) selon la revendication 3,
**caractérisé en ce que** ladite au moins une unité émettrice est une diode électroluminescente sans optique rapportée.
